# EUROPÄISCHE PATENTSCHRIFT

(11) **EP 0 542 003 B1**
(45) Veröffentlichungstag und Bekanntmachung des Hinweises auf die Patenterteilung: **03.01.1996**
(21) Anmeldenummer: 92118037.8
(22) Anmeldetag: 22.10.1992
(51) Int. Cl.: F16L 37/084

(54) **Lösbare Steckverbindung für halbstarre Rohre**
Releasable plug coupling for semi-rigid pipes
Raccord détachable à fiche pour tuyaux semi-rigides

(30) Priorität: 14.11.1991 DE 4137396
(43) Veröffentlichungstag der Anmeldung: 19.05.1993
(73) Patentinhaber: A. Raymond & Cie, F-38028 Grenoble-Cédex (FR)
(72) Erfinder: Rubichon, Michel, F-38340 Pommiers la Placette (FR)
(74) Vertreter: Kirchgaesser, Johannes, Dipl.-Ing.

(56) Entgegenhaltungen:
- EP-A- 0 506 586
- DE-A- 3 806 404
- FR-A- 1 474 023
- FR-A- 2 385 024
- US-A- 4 288 113

## Beschreibung

Die Erfindung bezieht sich auf eine lösbare Steckverbindung für halbstarre Rohre aus hartelastischem Kunststoff - wie z.B. Versorgungsleitungen - für Kraftfahrzeuge. Die Erfindung geht hierbei aus von dem im Oberbegriff des Patentanspruchs angegebenen und beispielsweise aus DE 38 06 404 A1 bekannten Stand der Technik.

Bei dieser bekannten Steckverbindung ist der Demontagering mit einem aus dem Gehäuseteil herausragenden Druckring versehen, welcher zum Eindrücken des Demontagerings eine allseits umlaufende, von außen gut zugängliche Angriffsfläche bietet. Hierdurch läßt sich zwar die Steckverbindung problemlos von Hand oder mit einem einfachen Werkzeug lösen. Doch besteht auch die Gefahr, daß sich der Leitungsschlauch aus der Steckverbindung unbeabsichtigt lösen kann, und zwar dann, wenn bei Reparaturarbeiten oder beim Zusammenbau des Kraftfahrzeugs der Monteur mit einem Werkzeug aus Versehen gegen den Druckring stößt und dadurch die Federlappen des Halterings kurzzeitig aufgespreizt werden. Wenn dann der Leitungsschlauch gleichzeitig noch unter Zug steht, kann es durchaus vorkommen, daß dieser aus dem Dichtungsbereich oder gar aus dem Haltebereich herausgezogen wird, wodurch die Steckverbindung nicht mehr dicht oder gar unterbrochen ist.

Aufgabe der Erfindung ist es, die vorgenannte Steckverbindung so zu gestalten, daß ein unbeabsichtigtes Eindrücken des Demontagerings und damit ein ungewolltes Herauslösen des Leitungsrohres völlig ausgeschlossen ist.

Zur Lösung dieser Aufgabe wird die im Anspruch 1 angegebene Ausbildung des Demontagerings vorgeschlagen, wobei in dem Unteranspruch, noch weitere Maßnahmen zur sicheren Einbettung und Führung des Demontagerings im Stützring der Steckverbindung enthalten sind, welche in der Zeichnung dargestellt ist und nachfolgend näher erläutert werden soll. Es zeigen
Fig. 1 einen Längsschnitt durch das Steckverbindungsgehäuse mit in der oberen Hälfte eingezeichneten Verbindungsteilen,
Fig. 2 einen zur Führung des Demontagerings ausgebildeten Stützring im Längsschnitt gemäß Linie II - II in Fig. 3,
Fig. 3 den Stützring in Draufsicht,
Fig. 4 einen Demontagering mit Führungsschlitzen im Längsschnitt gemäß Linie IV - IV in Fig. 5,
Fig. 5 den Demontagering in Draufsicht,
Fig. 6 eine zusammengebaute Demontagezange in Seitenansicht,
Fig. 7 den linken Zangenhebel in Draufsicht von innen,
Fig. 8 den rechten Zangenhebel in Draufsicht von innen und
Fig. 9 die Steckverbindung mit eingestecktem Zuleitungsrohr und angesetzter Demontagezange zum Lösen der Verbindung.

Die in den Figuren dargestellte Steckverbindung besteht aus einem Gehäuseteil 1 mit einem Durchgangsloch 2 für das durchströhmende Medium und mehreren stufenweise vergrößerten Hohlräumen 4, 6, 12 und 18 zur Aufnahme eines halbstarren Rohres 3 aus hartelastischem Kunststoff sowie zum Einbau der nachfolgend näher beschriebenen Verbindungsteile.

Der erste erweiterte Hohlraum 4 entspricht in seinem Innendurchmesser dem Außendurchmesser des Rohres 3 und weist an seinem inneren Ende eine Schulterfläche 5 auf, die als Anschlag für das in das Gehäuseteil 1 eindringende Rohr 3 dient.

Der zweite erweiterte Hohlraum 6 dient zur Aufnahme eines Dichtrings 7 aus gummiartigem Material, wobei dessen Innendurchmesser etwas kleiner ist als der Außendurchmesser des Rohres 3. Der Hohlraum 6 ist in axialer Richtung begrenzt durch eine weitere Schulterfläche 8 des Gehäuseteils 1 und nach der anderen Seite durch die Stirnfläche 10 eines Anschlagringes 9, dessen Innendurchmesser ebenfalls dem Außendurchmesser des Rohres 3 angepaßt ist und dessen Außendurchmesser dem Innendurchmesser des zweiten Hohlraumes 6 entspricht.

Dieser Anschlagring 9 ist mit einem Flanschring 11 versehen, welcher in den dritten erweiterten Hohlraum 12 hineinragt und an der Schulterfläche 13 dieses Hohlraumes 12 fest anliegt. In dem Flanschring 11 des Anschlagrings 9 ist ein Haltering 14 eingebettet, der mit seinem Außenbereich an der Innenschulter 15 des Anschlagrings 9 anliegt und schräg nach innen abstehende Federlappen 16 aufweist, die einen flachen, mit seiner Spitze in Einsteckrichtung zeigenden Kegelstumpf bilden, wobei der Anschlagring 9 im Auffederbereich der Federlappen 16 entsprechend konisch abgeschrägt ist.

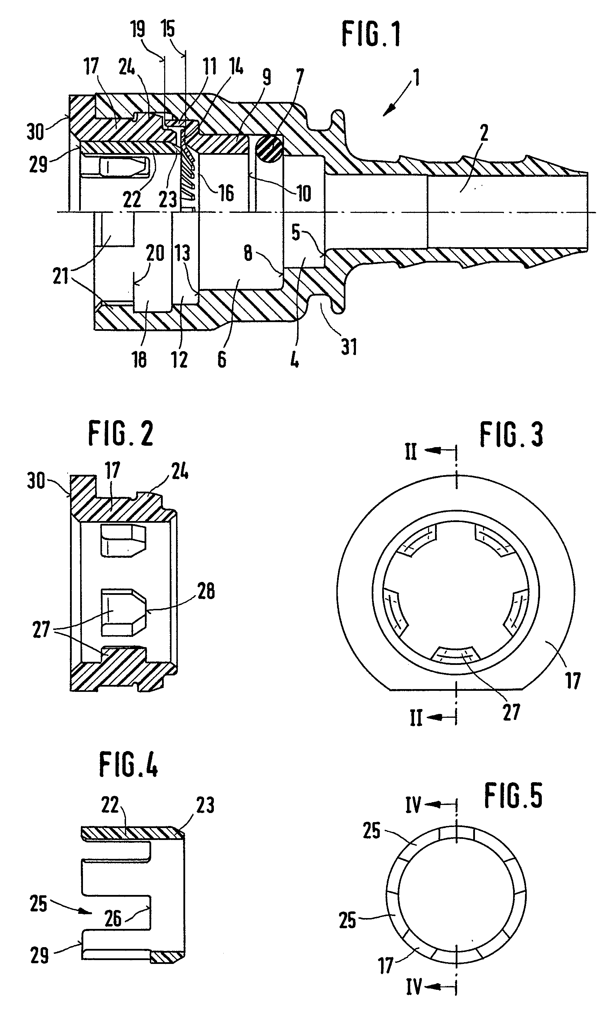

Der Außenbereich des Halteringes 14 ist mit etwas axialer Luft zwischen der Innenschulter 15 und einem Stützring 17 (Fig. 2 und 3) gehalten, welcher seinerseits mit einem flanschartig abgesetzten Außenring 24 in einen nochmals erweiterten Hohlraum 18 des Gehäuses 1 hineinragt und zwischen der Stirnfläche 19 des Flanschrings 11 und den Anschlagflächen 20 von vier am Eingang des Gehäuseteils 1 nach innen abgesetzten, über den Umfang gleichmäßig verteilten hakenförmigen Vorsprüngen 21 eingebettet ist. Der Innendurchmesser der Vorsprünge 21 ist hierbei mindestens gleich dem Innendurchmesser des Hohlraums 12, damit der Anschlagring 9 beim Zusammenbau problemlos bis zum Hohlraum 12 durchgeführt werden kann.

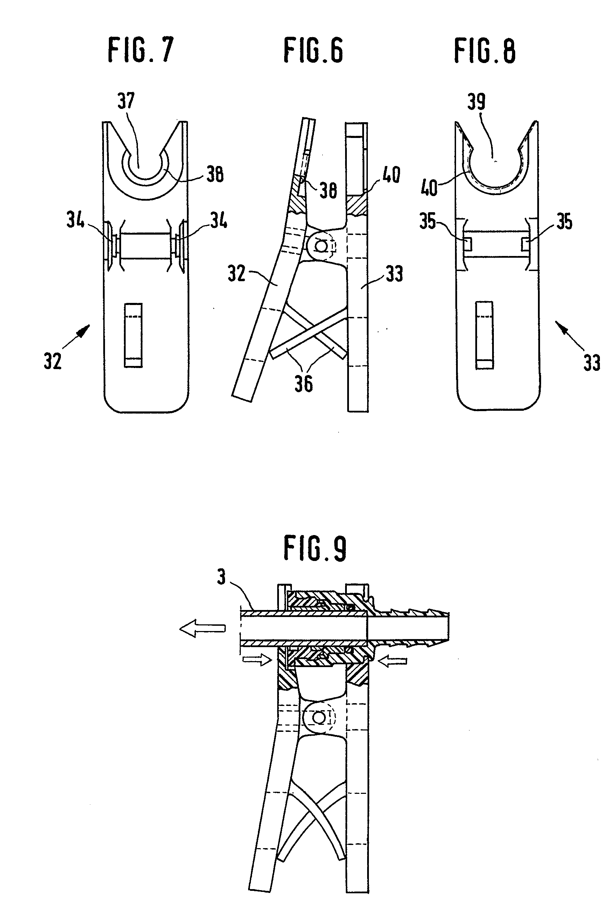

In diesem Stützring 17 ist ein Demontagering 22 (Figuren 4 und 5) axialverschieblich geführt. Sein in Einsteckrichtung vorderes Ende 23 ist hierbei konisch zugespitzt und reicht bis kurz vor die Federlappen 16 des Halterings 14 heran. Beim Eindrücken des Demontageringes 22 in Einsteckrichtung werden die Federlappen 16 des Halteringes 14 aufgespreizt und lösen sich von der Oberfläche des Rohres 3, so daß dieses aus der Steckverbindung herausgezogen werden kann.

Der Demontagering 17 weist über seinen Umfang verteilt mehrere achsparallele Schlitze 25 auf, die zum Rand 29 hin offen sind und vor dem konischen Spreizrand 23 mit Anschlagflächen 26 abschließen. Entsprechend der Anzahl und der Breite der Schlitze 25 befinden sich an der Innenwand des Stützrings 17 radial nach innen abstehende Vorsprünge 27 mit Anschlagflächen 28, die beim Zusammenfügen beider Teile in die Schlitze 25 eintauchen, so daß der Demontagering 22 im Stützring 17 längsverschieblich geführt ist und durch die Anschlagflächen 28 am Austritt aus dem Stützring 17 gehindert wird.

Der Demontagering 22 ist in seiner Länge so bemessen, daß der - in Einsteckrichtung - hintere Rand 29 vor dem hinteren Rand 30 des Stützrings 17 endet und somit in der Steckverbindung versenkt ist. Hierdurch wird sichergestellt, daß der Demontagering 22 nicht versehentlich durch äußere Krafteinwirkung eingedrückt werden kann.

Zum Lösen der Steckverbindung bedarf es daher eines besonderen zangenartigen Werkzeugs, welches in einer einfachen und zweckmäßigen Ausführungsform in den Figuren 6 - 8 dargestellt ist.

Diese Demontagezange läßt sich vorteilhafterweise aus hartelastischem Kunststoffmaterial herstellen und besteht aus zwei Zangenhebeln 32 und 33, die etwa im mittleren Bereich über ineinandersteckbare Gelenkansätze 34 und 35 schwenkbar miteinander verbindbar sind.

An den Zangenhebeln 32 und 33 sind auf der Bedienungsseite an den einander zugekehrten Innenseiten elastisch biegbare Stege 36 angeformt, die sich mit ihren freien Enden jeweils an den gegenüberliegenden Innenseiten auffederbar abstützen.

Auf der Greifseite ist der in der Zeichnung links dargestellte Zangenhebel 32 mit einer dem Rohrleitungsdurchmesser angepaßten Aussparung 37 mit einer trichterförmigen Einführöffnung versehen.

Diese Aussparung 37 umschließt das Rohr 3 etwa um 240° bis 270° und besitzt auf der entsprechenden Kreisbogenlänge einen streifenförmigen Ansatz 38 mit einer der Dicke des Demontagerings 22 entsprechenden Wandstärke.

Der andere Zangenhebel 33 besitzt ebenfalls eine kreisbogenförmige Aussparung 39 mit einer trichterförmigen Einführöffnung und einen Kragen 40, welcher in eine am Gehäuse 1 vorgesehene Rille 31 einsteckbar ist.

Zum Lösen eines in die Steckverbindung eingesetzten Zuleitungsrohres 3 wird die Demontagezange zunächst gegen die Federkraft der biegbaren Stege 36 zusammengedrückt und dann, wie in Figur 9 dargestellt, an die Steckverbindung angesetzt.

Der Kragen 40 wird hierbei in die Rille 31 des Gehäuseteiles 1 eingeschoben, während gleichzeitig die Aussparung 37 über das Rohr 3 gedrückt wird, bis der streifenförmige Ansatz 38 vor dem Rand 29 des Demontagerings 22 liegt. Sodann wird der Druck auf die Zangenhebel 32 und 33 soweit reduziert, daß der Ansatz 38 infolge der Rückfederkraft der Stege 36 auf den Demontagering 22 drückt und der konische Rand 23 die Haltezungen 16 aufspreizt.

Hierdurch lösen sich die Spitzen der Haltezungen 16 von der Rohroberfläche und das Rohr 3 läßt sich mühelos herausziehen.

Die Umschlingungslänge des streifenförmigen Ansatzes 38 ist hierbei entsprechend seinem Umschlingungswinkel von 240° bis 270° so bemessen, daß bei 5 vorhandenen Randbereichen 29 des Demontagerings 22 mindestens 3 Randbereiche 29 erfaßt werden, so daß ein sicheres Eindrücken des Demontageringes 22 gewährleistet ist.

## Patentansprüche

1. Lösbare Steckverbindung für halbstarre Rohre, bestehend aus einem Gehäuseteil (1) mit einem Durchgangsloch (2) und mehreren stufenweise vergrößerten Hohlräumen zur Aufnahme des Rohres (3), mit einem Dichtring (7) sowie verschiedenen Verbindungsteilen wobei dem Dichtring (7) in Einsteckrichtung des Rohres (3) ein elastisch auffederbarer Haltering (14) vorgelagert ist, der von einem Stützring (17) gehalten wird und dessen nach innen abstehende Federlappen (16) einen flachen, mit seiner Spitze in Einsteckrichtung weisenden Kegelstumpf bilden, wobei ferner zwischen dem Haltering (14) und dem Dichtring (7) ein Anschlagring (9) angeordnet ist, dessen den Federlappen (16) zugewandte Seite im Auffederbereich der Federlappen (16) konisch angeschrägt ist, und wobei in Einsteckrichtung vor dem Haltering (14) ein zum Stützring (17) axial verschieblicher Demontagering (22) mit konischem Rand (23) angeordnet ist, der beim Eindrücken des Demontagerings (22) in das Gehäuseteil (1) die Federlappen (16) des Halterings (14) aufspreizt,
wobei der Demontagering (22) und der Stützring (17) einen vorderen und einen dem vorderen in Einsteckrichtung des Rohres vorgelagerten hinteren Rand aufweisen,
dadurch gekennzeichnet, daß der hintere Rand des Stützringes (17) dem hinteren Rand des Demontageringes (22) in der Einsteckrichtung vorgelagert ist.

2. Steckverbindung nach Anspruch 1, dadurch gekennzeichnet, daß der Demontagering (22) über seinen Umfang verteilt mehrere achsparallele Schlitze (25) aufweist, die kurz vor dem konischen Spreizrand (23) mit Anlageflächen (26) abschließen und daß an der Innenwand des Stützrings (17) radial nach innen abstehende Vorsprünge (27) angeformt sind, die in die Schlitze (25) eintauchen.

## Claims

1. Releasable push-fit connector for semi-rigid pipes, composed of a housing part (1) with a through hole (2) and a plurality of hollow spaces, becoming larger in a step-wise manner, for receiving the pipe (3), with a sealing ring (7) and different connecting pieces, wherein an elastically expandable retaining ring (14) is mounted in front of the sealing ring (7) in the direction of insertion of the pipe (3), which is retained by a supporting ring (17), and the inwardly projecting spring tabs (16) of which form a flat, truncated cone, the tip of which faces the direction of insertion, wherein furthermore a stop ring (9) is arranged between the retaining ring (14) and the sealing ring (7), the side of which facing the spring tabs is conically tapered in the expansion area of the spring tabs (16), and wherein in the direction of insertion, in front of the retaining ring (14), a releasing ring (22) with a conical rim (23), axially displaceable with respect to the supporting ring (17), is arranged, which, when the releasing ring (22) is pushed into the housing part (1), spreads the spring tabs (16) of the retaining ring (14) apart,
wherein the releasing ring (22) and the supporting ring (17) are provided with a front rim and a rear rim mounted in front of the front edge in the direction of insertion,
characterised in that the rear rim of the supporting ring (17) is mounted in front of the rear rim of the releasing ring (22) in the direction of insertion.

2. Push-fit connector according to claim 1, characterised in that the releasing ring (22) is provided with a plurality of slits (25) parallel to its axis, distributed about its periphery which terminate in contact surfaces (26) shortly in front of the conical spread rim (23), and that radially inwardly extending projections are moulded on the internal wall of the supporting ring (17), which enter into the slits (25).

## Revendications

1. Raccord détachable à fiche pour tuyaux semi-rigides, se composant d'un corps d'emmanchement (1) comportant un orifice de passage traversant (2) et plusieurs cavités se suivant, dont le diamètre augmente progressivement par paliers successifs, pour l'emmanchement du tuyau (3), avec une bague d'étanchéité (7) ainsi que plusieurs éléments de raccord, une bague de retenue (14) à même de se déformer élastiquement étant en l'occurrence prévue devant la bague d'étanchéité (7), dans le sens de l'emmanchement du tuyau (3), bague de retenue qui se trouve maintenue en position par une bague d'appui (17) et dont les pattes élastiques (16) faisant saillie vers l'intérieur sont disposées suivant un tracé en tronc de cône aplati dont le sommet est orienté dans la direction de l'emmanchement, une bague de butée (9) étant en outre disposée entre la bague de retenue (14) et la bague d'étanchéité (7), bague dont la partie faisant face aux pattes élastiques (16) présente un tracé conique dans la zone de réaction élastique des pattes élastiques (16), et une bague de démontage (22), pouvant se déplacer dans le sens axial par rapport à la bague d'appui (17), étant en l'occurrence disposée, dans le sens de l'emmanchement, en amont de la bague de retenue (14), et comportant un rebord de forme conique (23) qui, lorsque l'on comprime la bague de démontage (22) dans le corps d'emmanchement (1) provoque l'ouverture des pattes élastiques (16) de la bague de retenue (14), la bague de démontage (22) et la bague d'appui (17) comportant en l'occurrence un rebord antérieur et un rebord postérieur placé en amont du rebord antérieur dans le sens de l'emmanchement du tuyau, **se caractérisant par le fa it** que le rebord postérieur de la bague d'appui (17) se trouve placé en amont du rebord postérieur de la bague de démontage (22) dans le sens de l'emmanchement.

2. Raccord détachable à fiche suivant la revendication 1, se caractérisant par le fait que la bague de démontage (22) comporte plusieurs rainures (25) parallèles à l'axe réparties sur son pourtour, qui se terminent par les faces de butée (26) légèrement avant le bord conique d'écartement (23) et par le fait que la paroi intérieure de la bague d'appui (17) comporte, solidaires de celle-ci par moulage, des bossages (27) formant saillie vers l'intérieur, qui viennent s'encastrer dans les rainures (25).
